**Europäisches Patentamt**

**European Patent Office**

**Office européen des brevets**

(19)

(11) Veröffentlichungsnummer: **0 137 270**
**B1**

(12)
# EUROPÄISCHE PATENTSCHRIFT

(45) Veröffentlichungstag der Patentschrift:
22.07.87

(51) Int. Cl.⁴: **G 01 P 3/488**

(21) Anmeldenummer: **84110183.5**

(22) Anmeldetag: **27.08.84**

(54) **Messgeber für Gleit- und Schleuderschutzanlagen zum Messen von Fahrzeugachsdrehzahlen.**

(30) Priorität: **28.09.83 CH 5237/83**

(43) Veröffentlichungstag der Anmeldung:
**17.04.85 Patentblatt 85/16**

(45) Bekanntmachung des Hinweises auf die Patenterteilung:
**22.07.87 Patentblatt 87/30**

(84) Benannte Vertragsstaaten:
**AT BE CH DE FR GB IT LI NL SE**

(56) Entgegenhaltungen:
**DE-A-2 045 917**
**US-A-3 801 845**
**US-A-4 171 495**

(73) Patentinhaber: **Werkzeugmaschinenfabrik Oerlikon-Bührle AG, Birchstrasse 155, CH- 8050 Zürich (CH)**

(72) Erfinder: **Schlatter, Werner, Chilestieg 13, CH- 8153 Rümlang (CH)**

## Beschreibung

Die Erfindung bezieht sich auf einen Messgeber für Gleitund Schleuderschutzanlagen zum Messen von Fahrzeugachsdrehzahlen mit einem auf einer Radachse befestigten Polrad und einem Impulsgeber.

Es ist ein Messgeber gemäss dem Oberbegriff des Patentanspruches für Schienenfahrzeuge aus der Praxis bekannt, bei dem ein ais Stirnzahnrad ausgebildetes Polrad an der Stirnseite einer Radachse befestigt ist. Ein magnetischer Impulsgeber ist im Achslagerdeckel radial angeordnet, derart, dass zwischen seiner Messfläche und dem Kopfkreis des Stirnzahnrades ein Spiel von ca. 0,5 - 1,2 mm besteht. Das Radachslager ist in diesem Fall als Rollenachslager ausgebildet.

Solche Messgeber können für mit Pendellagern ausgerüstete Fahrzeuge nicht verwendet werden, da die Pendelbewegung des Polrades grösser als der Abstand zwischen Impulsgeber und Polrad sein kann, insbesondere bei Pendelwinkeln von bis zu + bzw. - 3 Grad.

Die Erfindung, wie sie im Anspruch gekennzeichnet ist, löst die Aufgabe, einen Messgeber für den Einsatz an Pendellagern zu schaffen, bei dem die zulässigen Pendelbewegungen vernachlässigbar sind.

Die durch die Erfindung erreichten Vorteile sind im wesentlichen darin zu sehen, dass Beschädigung bzw. Zerstörung von Impulsgebern vermeidbar sind.

Im folgenden wird die Erfindung anhand der lediglich einen Ausführungsweg darstellenden Zeichnung näher erläutert.

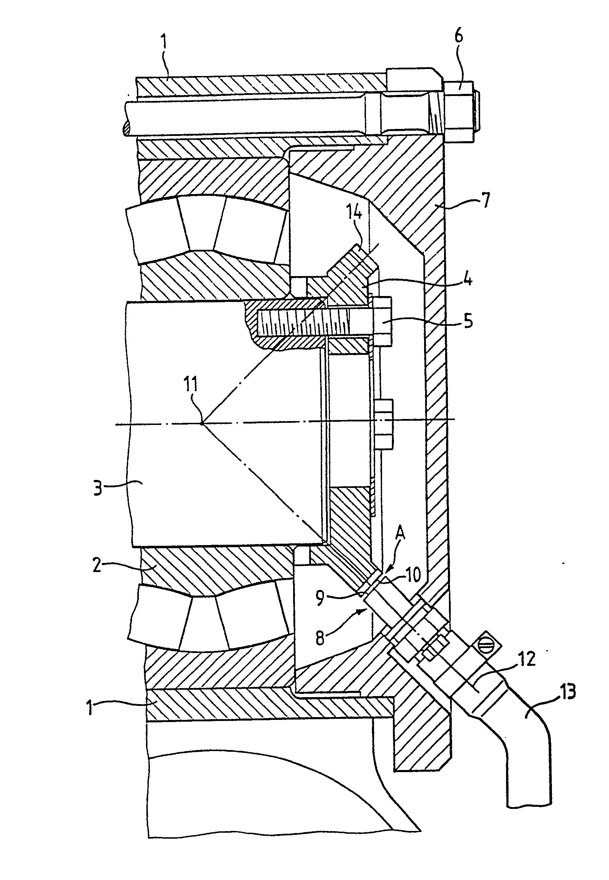

Die einzige Figur zeigt einen Schnitt durch einen Teil eines Pendelrollenlagers eines Schienenfahrzeuges. Ein Achslagergehäuse 1 enthält ein Pendelrollenlager 2 mit Zentrum 11, in dem seinerseits die eine Seite einer Radachse 3 drehbar gelagert ist. Stirnseitig an der Radachse 3 ist ein als Kegelrad 4 mit Zähnen 14 ausgebildetes Polrad mittels Schrauben 5 befestigt. In einem am Achslagergehäuse 1 mit Schrauben 6 befestigten Achslagerdeckel 7 ist ein magnetischer Impulsgeber 8 derart befestigt, dass ein Luftspalt A von beispielsweise 0,5 - 1,2 mm eine Messfläche 9 des Impulsgebers 8 von der Kopfkreisfläche des Kegelrades 4, im weiteren als Poloberflächen 10 bezeichnet, trennt. Die Poloberflächen 10 werden angenähert von einer Kugelzonenoberfläche umhüllt, wobei das Kugelzentrum mit dem Zentrum 11 des Pendelrollenlagers 2 zusammenfällt. Ebenfalls auf dieses Zentrum 11 gerichtet ist die Achse 12 des Impulsgebers 8. Ein elektrisches Kabel 13 verbindet den Impulsgeber 8 mit einer hier nicht näher dargestellten, an sich bekannten Gleit- und Schleuderschutzanlace.

Mit Vorteil kann der Einfluss der Pendelbewegung ganz eliminiert werden, wenn der Zahnkopf der Zähne 14 kreisförmig zum Zentrum 11 ausgebildet wird. Ferner kann das Kegelrad anstelle von Zähnen eine andere Polart aufweisen, z. B. mittels gedruckter Schaltung, Lochscheiben etc., wobei jedoch die mindestens angenäherte kugelzonenförmige Poloberfläche zu erhalten ist.

## Patentansprüche

1. Messgeber für Gleit- und Schleuderschutzanlagen zum Messen von Fahrzeugachsdrehzahlen mit einem auf einer Radachse (3) befestigten Polrad und einem Impulsgeber (8), dadurch gekennzeichnet, dass als Polrad ein Kegelrad (4) vorgesehen ist, dessen Poloberfläche (10) mindestens angenähert eine Kugelzonenoberfläche bildet, deren Kugelzentrum mit dem Zentrum (11) des die Radachse (3) lagernden Pendellagers (2) zusammenfällt.

## Claim

1. Sensor for anti-skid and anti-slip systems for measurement of vehicle shaft speed having a wheel having magnetic poles fixed on a wheel axis (3) and a pulse transmitter (8), characterised in that a bevelled wheel (4) is provided as the poled wheel, of which the pole faces (10) form at least approximately part of a spherical surface, the centre of which is coincident with the centre (11) of the spherical bearing which carries the wheel axis.

## Revendication

1. Emetteur de mesure pour la mesure de vitesses de rotation d'essieux de véhicules, pour des installations de protection contre le dérapage et le patinage, avec une roue polaire fixée sur un axe de roue (3) et un émetteur d'impulsions (8), émetteur de mesure caractérisé en ce qu'il est prévu en tant que roue polaire, une roue conique (4) dont la surface polaire (10) constitue au moins approximativement une surface de zone sphérique, le centre de la sphère coïncidant avec le centre (11) du palier à rotules (2) supportant l'essieu de roue (3).